(19) Europäisches Patentamt
European Patent Office
Office européen des brevets

(11) **EP 3 945 847 B1**

(12) **EUROPEAN PATENT SPECIFICATION**

(45) Date of publication and mention
of the grant of the patent:
**19.11.2025 Bulletin 2025/47**

(21) Application number: **20782511.8**

(22) Date of filing: **27.03.2020**

(51) International Patent Classification (IPC):
*A23K 20/142* (2016.01)   *A23K 50/15* (2016.01)
*A23K 50/10* (2016.01)   *A23K 10/30* (2016.01)

(52) Cooperative Patent Classification (CPC):
**A23K 10/30; A23K 50/10**

(86) International application number:
**PCT/IL2020/050371**

(87) International publication number:
**WO 2020/202141 (08.10.2020 Gazette 2020/41)**

(54) **CULTIVATED LEGUME SPECIES ONONIS ALOPECUROIDES AS A NOVEL FOOD SOURCE FOR LIVESTOCK ANIMALS**

KULTIVIERTE LEGUMINOSENSPEZIES ONONIS ALOPECUROIDES ALS NEUE FUTTERQUELLE FÜR NUTZVIEH

ESPÈCE DE LÉGUMINEUSE CULTIVÉE ONONIS ALOPECUROIDES UTILISÉE EN TANT QUE NOUVELLE SOURCE D'ALIMENTS POUR ANIMAUX D'ÉLEVAGE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: **29.03.2019 US 201962826411 P**

(43) Date of publication of application:
**09.02.2022 Bulletin 2022/06**

(73) Proprietor: **Kushnir, Uri**
**5322015 Givatayim (IL)**

(72) Inventor: **Kushnir, Uri**
**5322015 Givatayim (IL)**

(74) Representative: **Ipsilon Benelux**
**76, rue de Merl**
**2146 Luxembourg (LU)**

(56) References cited:
**WO-A1-2008/013939   CN-A- 106 962 620**

• **NAIR R M ET AL:** "Evaluating pasture legumes for resistance to aphids", vol. 43, no. 11, 3 December 2003 (2003-12-03), pages 1345 - 1349, XP009534306, ISSN: 0816-1089, Retrieved from the Internet <URL:http://www.publish.csiro.au/?paper=EA03187> DOI: 10.1071/EA03187
• **CASTRO-MONTOYA J ET AL:** "Effects of feeding tropical forage legumes on nutrients digestibility, nitrogen partitioning and performance of crossbred milking cows", ANIMAL FEED SCIENCE AND TECHNOLOGY, ELSEVIER, AMSTERDAM, NL, vol. 247, 30 October 2018 (2018-10-30), pages 32 - 40, XP085587749, ISSN: 0377-8401, DOI: 10.1016/J.ANIFEEDSCI.2018.10.017
• **COOKE K M ET AL:** "Performance of Dairy Cows Fed Annual Ryegrass Silage and Corn Silage with Steam-Flaked or Ground Corn", JOURNAL OF DAIRY SCIENCE, AMERICAN DAIRY SCIENCE ASSOCIATION, US, vol. 91, no. 6, 1 June 2008 (2008-06-01), pages 2417 - 2422, XP026956597, ISSN: 0022-0302, [retrieved on 20080601]
• **GORLIER, ALESSANDRA ET AL.:** "Changes in pasture and cow milk compositions during a summe: transhumance in the western Italian Alps", 2012, XP055746991

**Description**

TECHNICAL FIELD OF THE INVENTION

The present invention relates to a novel type of food source for livestock animals. More particularly it relates to a novel use of legume species *Ononis alopecuroides* as a food source for livestock animals.

BACKGROUND OF THE INVENTION

Domestic animals continue to make important contributions to global food supply and, as a result, animal feeds have become an increasingly critical component of the integrated food chain. Livestock products account for about 30 percent of the global value of agriculture and 19 percent of the value of food production and provide 34 percent of protein and 16 percent of the energy consumed in human diets. Meeting consumer demand for more meat, milk, eggs and other livestock products depends to a major extent, on the availability of regular supplies of appropriate, cost-effective and safe animal feeds. Few issues have generated as much public concern in recent times, however, as the protein supply in feeds for livestock production.

Not only is the demand for livestock products increasing markedly due to population growth, particularly in the developing world, but feed suppliers also have to cope with increasing safety concerns, epitomized by the bovine spongiform encephalopathy (BSE) or mad cow disease crisis, associated with the feeding of meat and bone meal (MBM). There is also anxiety about the use of genetically modified crops such as soybean and maize and concern about incidents involving chemical contamination (e.g., dioxin) of feeds. The considerable and increasing demand for animal protein is focusing attention on the sources of feed protein and their suitability, quality and safety for future supply. Consumers in the market are increasingly demanding assurances about food safety and production methods throughout the integrated food chain.

An appropriate available energy supply in a balanced diet for efficient protein use by livestock is of a great importance, a high energy to protein ratio being needed to optimize the use of the protein.

Legumes are a traditional source of plant proteins for animal feed and their production can provide a range of benefits both on farms and for feed manufacturers. The current forage legumes species used presently for this purpose are limited due to lack of profitability. As opposed to wheat, forage legumes are known for lodging at the cutting stage and therefore cannot be harvested by traditional equipment such as reaper. Instead, a mower has to be used resulting in yield losses and quality deterioration due to contamination with soil and its components. Developing novel, high yielding and profitable legume forage species which will serve as a high-quality protein source and will increase nutritional value of the animal feed remains a long and unmet need.

NAIR R M ET AL, "Evaluating pasture legumes for resistance to aphids", vol. 43, no. 11, doi:10.1071/EA03187, ISSN 0816-1089, (20031203), pages 1345 - 1349, AUSTRALIAN JOURNAL OF EXPERIMENTAL AGRICULTURE, CSIRO, COLLINGWOD, AU, URL: http://www.publish.csiro.au/?paper=EA03187, discloses the use of Ononis alopecuroides as pasture legume for livestock i.e., specifically for grazing.

BRIEF DESCRIPTION OF THE DRAWINGS

   FIG.1 Demonstrates young seedlings of Ononis alopecuroides;
   FIG.2 Demonstrates a young plantlet of Ononis alopecuroides;
   FIG.3 Demonstrates Ononis alopecuroides at the flowering stage;
   FIG.4 Demonstrates Ononis alopecuroides at the ripening stage; and
   FIG.5 demonstrates seeds of Ononis alopecuroides after harvest.

**SUMMARY OF THE INVENTION**

Accordingly, it is a principal object of the present invention to provide a novel high yielding forage legume superior to the currently used forage legumes in terms of profitability and nutritional value, as well as useful in agricultural crop rotation practice.

The invention provides a total mixed ration (TMR) for a livestock animal according to claim 1. Further developments of the invention are according to claims 2-5.

The invention further provides a method for improving a nutritional value of a TMR for a livestock animal according to claim 6. Further developments of the invention are according to claims 7-9.

The invention further provides a method of enhancing milk production in a dairy cow, according to claim 10.

Additional features and advantages of the invention will become apparent from the following drawings and description.

## DETAILED DESCRIPTION OF THE INVENTION

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

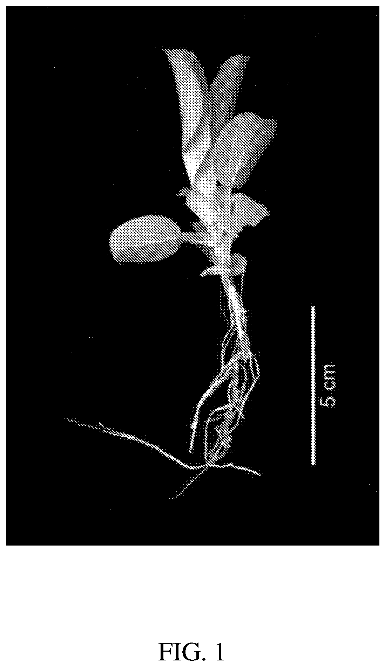

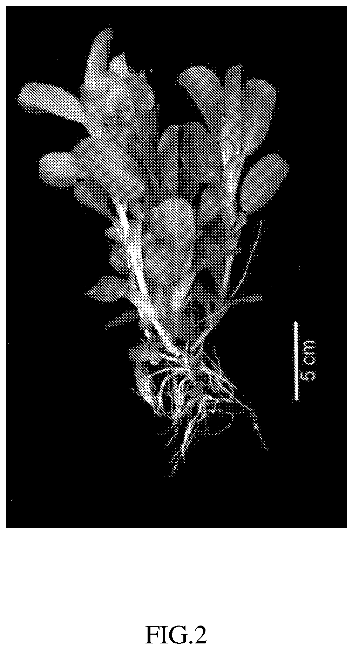

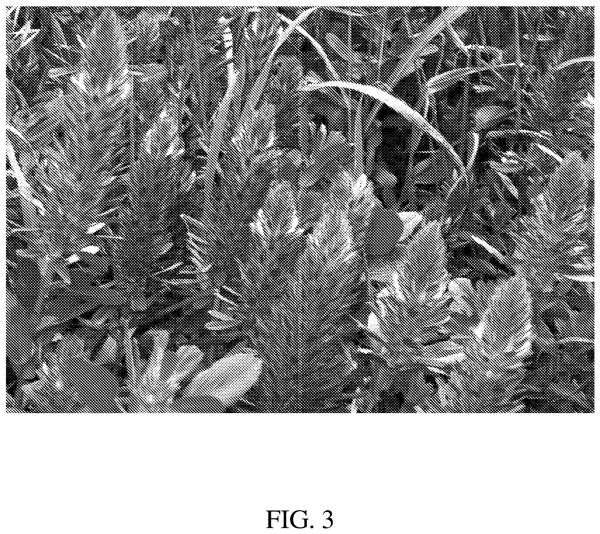

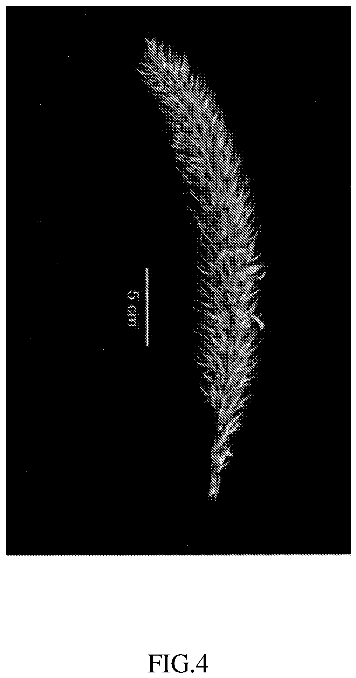

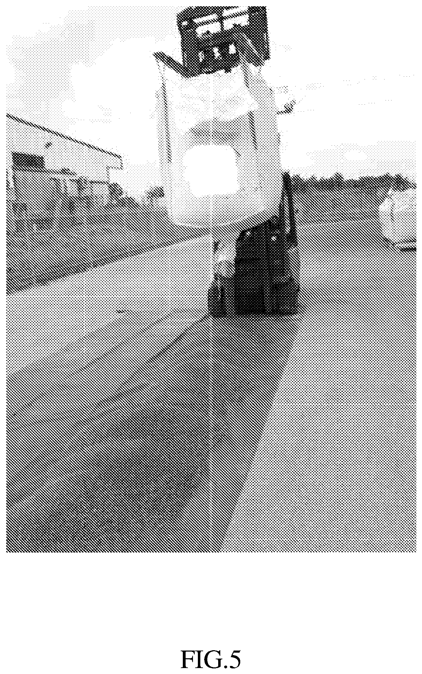

A total mixed ration (TMR) for a livestock animal comprising a legume forage component is derived from a legume species Ononis alopecuroides is provided by the current invention. Reference is now made to Figures 1 to 4 demonstrating characteristics of the legume species of the invention *Ononis alopecuroides* at different phenological stages: seedling (Fig.1); plantlet (Fig.2); flowering (Fig.3); and, ripening (Fig.4). Reference is now made to Fig. 5 demonstrating seeds of the legume species *Ononis alopecuroides. Ononis alopecuroides* is characterized by a high plant stature of 1.0-1.2m and can be cultivated by common agricultural techniques such as, without limitation, seeding by drill, cutting by reaper and seed harvesting by a combine. At the flowering stage shown in Fig.3, Ononis alopecuroides is characterized by pink spike-like inflorescence. The legume forage component derived from Ononis alopecuroides is the only legume forage component of the TMR. As used herein, the term "total mixed ration" (TMR) refers, without limitation, to a single feed mix combining feeds formulated to a specific nutrient content. TMR generally contains the following components: forages; grains; protein feeds; minerals; vitamins and feed additives. A TMR includes components such as fat, vitamins and minerals in proportions and within ranges that are known in the art. In some embodiments, maximum fiber digestibility occurs in a rumen environment suitable for growth of fiber-digesting organisms. Thus, the levels of other components are considered when formulating a total dairy cattle feed ration. For example, high levels of unsaturated fatty acids may depress NDF digestibility. The level of non-structural carbohydrate is adjusted to provide sufficient energy from starch fermentation without decreasing rumen pH to such an extent that the growth of fiber-digesting microbes is inhibited. The forage component in the ration typically constitutes about 20% to about 60% of the ration on a dry matter basis and is added to achieve a fiber content of about 20% to about 40%, preferably from about 25% to about 35%.

In one embodiment, the legume forage component of the TMR is *Ononis alopecuroides* hay. In another embodiment, the legume forage component derived from Ononis alopecuroides is silage. As used herein, the term "silage" refers, without limitation, to a fermented, high-moisture stored fodder which can be fed to the livestock animals. Silage is fermented and stored in a process called ensilage and is usually made from grass crops. As used herein, the term "hay" refers, without limitation, to grass that has been cut and dried to be used as a fodder. According to the embodiments of the invention, the TMR is intended for a livestock animal. The term "livestock", as used herein, refers, without limitation, to domesticated animals raised in an agricultural setting to produce labor and commodities such as meat, eggs, milk, fur, leather, and wool. In one embodiment, the livestock animal is selected from the group consisting of cattle, goat, pig, horse and sheep. In yet further embodiment, the livestock animal is a beef cattle or dairy cattle. In another embodiment, livestock animal is a dairy cow. In one embodiment, the livestock animal is a dairy cow at the lactating state. Sources that may be used to complete the forage component of the ration include, but are not limited to, corn silage; corn plants, alfalfa haylage, grass silages (e.g., sudangrass, orchardgrass or sorghum-based silage), grass hays (e.g., sudangrass or orchardgrass) and alfalfa or clover hay. Such other forages are known in the art.

In some embodiments, the invention provides a TMR for a livestock animal comprising a forage legume component, wherein said legume component is derived from a legume species *Ononis alopecuroides.* The legume forage component derived from *Ononis alopecuroides* is the only forage legume component. In one embodiment, the legume forage component is *Ononis alopecuroides* hay. In one embodiment, the *Ononis alopecuroides* hay is characterized by crude protein content of at least 5%. In one embodiment, the *Ononis alopecuroides* hay is characterized by crude protein content of at least 10%. In another embodiment, the crude protein content is 5%, 10%, 12%, 15%, 17%, 20%, 25% and 30%. In one embodiment, the legume forage component derived from *Ononis alopecuroides* is in the form of hay having *in-vitro* neutral detergent fiber (NDF) digestibility of at least 10%. In one embodiment, NDF digestibility is at least 15%. In one embodiment, NDF digestibility is at least 20%. In one embodiment, NDF digestibility is at least 30%. In one embodiment, NDF digestibility is 30% to 65%; 35% to 65%, 40% to 65%, 45% to 65%, 47% to 65%; 50% to 65%; 53% to 65%; 55% to 65%. In one embodiment, NDF digestibility is 10%, 15%, 20%, 25%, 30%, 35%, 40%, 45%, 50%, 55%, 60%, 65%, and 70%. In one embodiment, the legume forage component derived from *Ononis alopecuroides* is in the form of hay having *in-vitro* acidic detergent fiber (ADF) digestibility of at least 10%. In one embodiment, the legume forage component derived from *Ononis alopecuroides* is in the form of hay having *in-vitro* acidic detergent fiber (ADF) digestibility of at least 20%. In one embodiment, ADF digestibility is 25% to 50%; 27% to 50%; 30% to 50%; 33% to 45%; 35% to 45%. In one embodiment, ADF digestibility is 10%, 15%, 20%, 25%, 30%, 35%, 40%, 45%, 50%, and 55%.

According, to some embodiments, the invention provides a method for improving a nutritional value of a TMR for a livestock animal comprising incorporating into the TMR a legume forage component derived from *Ononis alopecuroides*. On one embodiment, the legume forage component derived from *Ononis alopecuroides* is in the form of hay having NDF digestibility of about 10%, 15%, 20%, 25%, 30%, 35%, 40%, 45%, 50%, 55%, 60%, 65%, and 70%. In another embodiment, the legume forage component derived from *Ononis alopecuroides* is in the form of hay having ADF digestibility is 10%, 15%, 20%, 25%, 30%, 35%, 40%, 45%, 50%, and 55%. In one embodiment, the legume forage component derived from Ononis alopecuroides is in the form of hay having crude protein of about 10% or more. In one embodiment, the legume forage component derived from Ononis alopecuroides is in the form of hay having In-Sacco True Digestibility (ISTD) of about 30% or more. In another embodiment, ISTD is at least 30%, 35%, 40%, 45%, 50%; 55%; 60%; 65%; and 70%.

In some embodiments, the invention provides a method for improving digestibility of a feed for a livestock animal comprising incorporating into the feed a legume component derived from *Ononis alopecuroides*. In one embodiment, the legume forage component derived from *Ononis alopecuroides* is in the form of hay having NDF digestibility of having, without limitation, NDF digestibility of about 10%, 15%, 20%, 25%, 30%, 35%, 40%, 45%, 50%, 55%, 60%, 65%, and 70%; and/or ADF digestibility of 10%, 15%, 20%, 25%, 30%, 35%, 40%, 45%, 50%, and 55%; and/or crude protein content of 5%, 10%, 12%, 15%, 17%, 20%, 25% and 30%; and/or ISTD of at least 30%, 35%, 40%, 45%, 50%; 55%; 60%; 65%; and 70%. In one embodiment, the legume forage component derived from *Ononis alopecuroides* is fed to the livestock animal as part of a TMR.

According to some embodiments, the invention provides a method for feeding a livestock animal, comprising providing the livestock animal with a legume forage derived from *Ononis alopecuroides*. In one embodiment, the legume forage derived from *Ononis alopecuroides* is fed to the livestock animal as part of a TMR. In one embodiment, the legume forage derived from *Ononis alopecuroides* is in the form of hay.

According to some embodiments the invention provides a method for balancing a diet of a livestock animal comprising feeding the livestock animal with a forage comprising *Ononis alopecuroides* hay as a protein source. In one embodiment, *Ononis alopecuroides* hay is characterized by crude protein content of at least 10%. In one embodiment, the crude protein content is at least 5%, 10%, 12%, 15%, 17%, 20%, 25% and 30%. In one embodiment, the legume forage derived from Ononis alopecuroides is in the form of silage.

According to some embodiments, the invention provides *Ononis alopecuroides* cultivated plant characterized by protein content of at least 10% based on dry matter when harvested at the phenological state of 80% flowering. In one embodiment, the protein content is at least 10%, 12%, 14%, 16%, 18%, 20%, and 25%. In one embodiment, the protein content is from 10% to 20% based on dry matter when harvested at the phenological state of 80% flowering. According to some embodiments, the invention provides *Ononis alopecuroides* cultivated plant characterized by characterized in In-Sacco True Digestibility of at least 50% when harvested at the phenological state of 80% flowering. According to some embodiments, the invention provides *Ononis alopecuroides* cultivated plant characterized by having a dry matter yield of at least 2.5 ton/ha when harvested at the phenological state of 80% flowering. In yet another embodiment, the dry matter yield is from 3 ton/ha to 10 ton/ha. In yet another embodiment, the dry matter yield is 2.7 ton/ha; 3 ton/ha; 3.5 ton/ha; 4 ton/ha; 4.5 ton/ha; 5 ton/ha; 5.5 ton/ha; 6 ton/ha; 6.5 ton/ha; 7 ton/ha; 7.5 ton/ha; 8 ton/ha; 8.5 ton/ha. According to some embodiments, the invention provides *Ononis alopecuroides* cultivated plant characterized by resistance to lodging. According to some embodiments, the invention provides use of the cultivated plant *Ononis alopecuroides* as a legume forage component in TMR for a livestock animal. In one embodiment, the cultivated plant *Ononis alopecuroides* is in the form of hay. According to some embodiments, the invention provides an *Ononis alopecuroides* cultivated plant for use in a field crop rotation system. According to some embodiments, the invention provides an *Ononis alopecuroides* cultivated plant characterized by susceptibility to grazing by herb-eating animals.

According to some embodiments, the invention provides an *Ononis alopecuroides* cultivated plant characterized by positive score in test for edibility by dairy cows.

According to some embodiments, the invention provides a method of enhancing milk production in a dairy cow, comprising providing the dairy cow at the lactating state with a total mixed ration comprising a legume forage component derived from a legume species *Ononis alopecuroides*. According to some embodiments, the invention provides a method of enhancing milk yield in a dairy cow, comprising providing the dairy cow at the lactating state with a TMR comprising a legume forage component derived from a legume species *Ononis alopecuroides*. According to some embodiments, the invention provides a method of improving production efficiency of a dairy cow comprising the dairy cow at the lactating state with a TMR comprising a legume forage component derived from a legume species *Ononis alopecuroides*. According to some embodiments, the invention provides a method of improving ECM (Energy Corrected Milk) yield of a dairy cow comprising the dairy cow at the lactating state with a TMR comprising a legume forage component derived from a legume species *Ononis alopecuroides*. The legume component is combined with other feed components and fed to livestock animals under generally accepted management conditions. According to some embodiments, the invention provides a method of improving IECM (Israeli Economic Corrected Milk) yield in a dairy cow comprising the dairy cow at the lactating state with a TMR comprising a legume forage component derived from a legume species *Ononis alopecuroides*. According to some embodiments, the invention provides a method of improving Milk Protein yield of a dairy cow comprising the dairy cow at the lactating state with a TMR comprising a legume forage component derived from a legume species *Ononis alopecuroides*.

Typical livestock animal management conditions include known measures for animal care, shelter and veterinary treatment, under lactation and gestation cycles used by dairy farmers. Under typical conditions for feeding and managing of lactating dairy cows, a total ration comprising legume forage component derived from *Ononis alopecuroides* disclosed herein provides a significant increase in milk yield on a raw basis or fat-corrected basis, without adversely affecting general animal health, particularly live weight.

**Example 1: Feasibility of producing Ononis alopecuroides as cultivated species in agriculture.**

In this experimental work, the seeding was done by drill, cutting by reaper and seed harvesting by a combine.

The results obtained from a field test are summarized in Table 1:

| Phenological stage | Dry Matter (%) | Dry Matter Yield (ton/ha) | Ash (%) | Protein (%) | NDF (%) | ADF (%) | Hemicellulose (%) | Digestibility ISTD |
|---|---|---|---|---|---|---|---|---|
| Wheat-initial grain filling | 31.82 [a] | 4.94 [b] | 7.20 | 10.23[c] | 59.04[a] | 32.60[b] | 22.8 | 62.0 |
| Clover- 80% flowering | 16.11 [b] | 2.99 [c] | 12.51 | 13.16 [ab] | 60.36 [a] | 39.96 [a] | 14.0 | 54.0 |
| New legume 80% flowering | 20.20 [b] | 7.57 [a] | 10.30 | 14.24 [a] | 50.73 [b] | 33.09 [b] | 27.9 | 69.2 |

It was found that the environmental requirements for optimal growth of *Ononis alopecuroides* are alluvial soil and at least 500 mm annual rainfall. The dry matter yield of the species at stage of 80% flowering out yields significantly the commercial clover at similar phonological stage and also a super agronomic bread wheat cultivar at the stage of initial grain filling. The protein content of vegetative biomass of the species was found to be higher 14.2% - 18.6% than that of other legumes and significantly higher than that of the wheat biomass.

An additional important advantage of the species, compared to other forage legumes, is resistance to lodging at the cutting stage. This trait enables the use of a reaper for its cutting in contrast to the use of mower cutting in other lodging legumes. This trait has far reaching significance in avoiding yield losses and quality deterioration occurring in mower cutting of the lodging legumes.

In Addition, it was found that fat is excreted from the petals of spike-like inflorescence of Ononis alopecuroides. The introduction of such a natural oily ingredient in the animal diet might have an effect in its metabolism and in the nutritional value of its products.

**Example 2: The effect of inclusion of the *Ononis alopecuroides* legume in high yielding dairy cows' ration on production, feed efficiency, rumen environment, and digestibility.**

Forty-two multiparous high yielding Israeli-Holstein dairy cows were divided into 2 treatment groups, each of 21 cows according to milk production, Day in Milk (DIM), parity and body weight (BW).The treatments were as follows: 1) Control - Cows were fed a standard Israeli milking-cow ration that contained 1.78 kg of oat hay per 20 kg DM (8.9% of ration - DM basis). 2) "Primono - Cows" were fed similar ration and the oat hay was substituted with 1.78 kg of *Ononis alopecuroides* hay, further called "Primono hay", per 20 kg DM (8.9% of ration - DM basis). As used herein, the term "Primono Cows" refers to cows fed with "Primono hay". The study continued 9.5 weeks as a continuous experiment. Cows were milked 3 times daily and yields were recorded electronically. Cows were weighed automatically after each milking with a walking electronic scale. During the whole study period health events were recorded. During the entire study period, milk samples were collected from 3 consecutive milkings every ~10 d, and analyzed for milk fat, protein, lactose and urea by infrared. Milk yields, body weight, rumination and lying times were recorded electronically. Milk samples were collected every ~10 for milk content analysis. Rumen fluid samples were collected from a subset of cows (15 from each treatment group) on one day at 2 time points for pH, ammonia, and volatile fatty acids (VFA).

Energy content in milk was calculated according to NRC (United States National Research Council, 2001) equations.

Energy balance (EB) was calculated daily according to NRC (2001) equations as follows:

$$NE_c = NE_L \text{ per kilogram of DM} \times DMI;$$

$$NE_m = BW^{0.75} \times 0.08;$$

$NE_p$ = milk (kg) $\times$ [{0.0929 $\times$ (fat %)} + {0.0547 $\times$ (protein %)} + {0.0395 $\times$ (lactose %)}];

$$EB = NE_c - (NE_m + NE_p);$$

Where: $NE_c$ = net energy consumed; $NE_m$ = net energy required for maintenance; $NE_p$ = net energy output in milk.

The conversion rate of feed DMI to milk was calculated from the daily individual data.

Rumen fluid samples were collected from a subset of cows (15 from each treatment group) using a stomach vacuum tube, on one day 2 time points during the 6th week for pH, ammonia, and VFA measurements. The samples were taken 2h and 5h post feeding. The diets were sampled every week and DM was determined. Feed samples were dried at 65 °C for 24 h and then ground to pass through a 1.0-mm screen (Retsch S-M-100; Retsch GmbH, Haan, Germany). The ground samples were dried at 100 °C for 24 h and analyzed for N by method 984.13 of the AOAC (1990). Neutral detergent fiber (NDF) and acid detergent fiber (ADF) contents were determined with Ankom equipment (Ankom Technology, Fairport, NY). The NDF content was determined by using amylase and sodium sulfite, with ash included for calculations (Van Soest et al., 1991). The AOAC (1990) methods 935.13 and 964.06 were used to determine Ca and P, respectively. Samples were dried at 550 °C for 3 h for ash determination.

Statistical analysis

Continuous variables such as DMI, milk and milk solids, rumination time, resting time, and rumen measurements were analyzed as repeated measurements using the PROC MIXED procedure of SAS software (version 9.2, 2002). When relevant, variables were analyzed with the specific data of the pre-treatment period as co-variant. The model used was:

$$Y_{ijklm} = \mu + T_i + L_j + C(T \ast L)_{ijk} + DIM_{ijkl} + E_{ijklm}$$

Where $Y_{ijklm}$ is the dependent variable; $\mu$ = overall mean; $T_i$ = treatment effect; $_i$ = 1 to 2; $L_j$ = parity; $_j$ = 2 or >2; $C(T \ast L)_{ijk}$ = $cow_k$ nested in $treatment_i$ and $parity_j$; $DIM_l$ = days in milk as continuous variable; $E_{ijklm}$ = random residual.

The autoregressive order 1 (AR 1) was used as a covariance structure in the model for the production data.

Least square means and adjusted SEM are presented in Tables. The $P < 0.05$ was accepted as significant and tendencies were reported at $0.05 < P < 0.10$

Ingredients and chemical composition of the rations are summarized in Table 2.

Table 2: Ingredients and chemical composition of the rations

| Ingredients (% of DM) | Treatments | |
|---|---|---|
| | Control | Primono |
| Corn grain, ground | 19.8 | 21.9 |
| Barley grain rolled | 2.2 | 2.2 |
| Wheat grain rolled | 4.4 | 4.4 |
| Soybean meal | 3.1 | 3.7 |
| Rapeseed meal | 8.0 | 8.0 |
| Cottonseed | 1.2 | 1.2 |
| Wheat bran | 5.2 | 4.6 |
| Wheat silage | 7.1 | 7.1 |
| Corn silage | 21.1 | 21.0 |
| Oats hay | 8.9 | 0 |
| Primono hay | 0 | 8.9 |

(continued)

| Ingredients (% of DM) | Treatments | |
|---|---|---|
| | Control | Primono |
| Gluten feed | 6.6 | 4.9 |
| Golden DDG | 6.6 | 6.6 |
| By product of dairy industry | 1.3 | 1.3 |
| Calcium soap of fatty acids | 1.7 | 1.8 |
| Urea | 0.3 | 0.2 |
| Limestone | 0.3 | 0.1 |
| Sodium bicarbonate | 0.7 | 0.7 |
| Salt | 1.1 | 1.1 |
| Vitamins and minerals[1] | 0.1 | 0.1 |
| **Chemical composition (in DM basis)** | | |
| $NE_L$[2] (Mcal) | 1.79 | 1.79 |
| Crude protein, % | 16.5 | 16.5 |
| Forage, % | 37.0 | 37.2 |
| NDF, % | 31.1 | 30.5 |
| Forage NDF, % | 17.3 | 17.3 |
| Ether extract, % | 4.8 | 4.8 |
| Ca, % | 0.009 | 0.009 |
| P, % | 0.005 | 0.005 |
| [1]Contained 20,000,000 IU of vitamin A/kg, 2,000,000 IU/kg of vitamin D, 15,000 IU/kg of vitamin E, 6000 mg/kg of Mn, 6000 mg/kg of Zn, 2000 mg/kg of Fe, 1500 mg/kg of Cu, 120 mg/kg of I, 50 mg/kg of Se, and 20 mg/kg of Co. [2]Calculated using the NRC (1989) values | | |

Results

The results are summarized in Tables 3-5.

Table 3: Effects of Primono inclusion in the diet on milk yield and milk solids

| | Treatments[1] | | | |
|---|---|---|---|---|
| | Control | Primono | SEM | P = |
| Milk yield | | | | |
| Milk, kg/d | 50.4 | 51.5 | 0.33 | 0.03 |
| ECM[2], Mcal/d | 35.8 | 36.8 | 0.30 | 0.02 |
| FCM[3] 4%, kg/d | 46.9 | 47.4 | 0.42 | 0.35 |
| IECM[4], kg/d | 49.2 | 52.5 | 0.43 | 0.0001 |
| Milk solids concentration and yields | | | | |
| Fat, % | 3.53 | 3.48 | 0.09 | 0.68 |
| Protein, % | 3.46 | 3.52 | 0.02 | 0.07 |
| Lactose, % | 4.96 | 5.02 | 0.02 | 0.01 |
| Milk urea-N, mg/dL | 15.1 | 14.0 | 0.60 | 0.20 |

(continued)

| Milk solids concentration and yields | | | | |
|---|---|---|---|---|
| Fat, kg/d | 1.77 | 1.86 | 0.06 | 0.35 |
| Protein, kg/d | 1.70 | 1.86 | 0.04 | 0.02 |
| Lactose, kg/d | 2.49 | 2.64 | 0.07 | 0.14 |
| [1]High-yielding dairy cows were fed either a Control - standard Israeli milking-cow ration that contained 1.78 kg DM of oat hay (8.9 % of diet - DM basis), or Primono - fed similar ration that contained 1.78 kg DM of Primono legume (8.9 % of diet - DM basis). [2]ECM - energy corrected milk. [3]FCM - fat corrected milk. [4]Israeli economic corrected milk | | | | |

Table 4: Effects of Primono inclusion in the diet on milk yield and milk solids

| | Treatments[1] | | | |
|---|---|---|---|---|
| | Control | Primono | SEM | P-value |
| n, cows | 21 | 21 | | |
| DMI, kg/d | 32.2 | 31.7 | 0.25 | 0.17 |
| Energy intake, Mcal/d[2] | 35.8 | 36.8 | 1.7 | 0.85 |
| Milk/DMI, kg/kg | 1.57 | 1.65 | 0.01 | 0.001 |
| DMI/Milk, g/kg | 656 | 628 | 6.2 | 0.002 |
| 4% FCM/DMI, kg/kg | 1.44 | 1.50 | 0.01 | 0.004 |
| IECM/DMI, kg/kg | 1.54 | 1.67 | 0.02 | 0.0001 |
| DMI/IECM, g/kg | 663 | 620 | 7.4 | 0.0002 |
| Rumination time, min/d | 550 | 520 | 13.5 | 0.12 |
| Resting time, min/d | 658 | 650 | 4.7 | 0.23 |
| Average BW week 1/ kg | 660.8 | 663.0 | 10.5 | 0.86 |
| Average BW week 10/ kg | 696.2 | 696.8 | 12.4 | 0.97 |
| Average BW gain/kg | 35.3 | 33.4 | 3.5 | 0.70 |
| EB, Mcal/d | 11.0 | 9.0 | 0.4 | 0.001 |
| [1]High-yielding dairy cows were fed either a Control - standard Israeli milking-cow ration that contained 1.78 kg DM of oat hay (8.9 % of diet - DM basis), or Primono - fed similar ration that contained 1.78 kg DM of Primono legume (8.9% of diet - DM basis). [2]Energy intake was calculated as $NE_L$ content of diet (Mcal/kg DM) multiplied by DMI (kg/d). | | | | |

Table 5: Effects of Primono inclusion in the diet on rumen pH, ammonia and volatile fatty acids (VFA) concentrations

| | Treatments[1] | | | |
|---|---|---|---|---|
| | Control | Primono | SEM | P = |
| Rumen pH | 5.80 | 5.77 | 0.04 | 0.71 |
| Rumen ammonia, mg/L | 205.1 | 184.2 | 7.3 | 0.05 |
| Acetate, mM | 55.0 | 53.4 | 1.36 | 0.41 |
| Propionate, mM | 35.3 | 33.8 | 1.12 | 0.35 |
| Butyrate, mM | 14.8 | 13.0 | 0.66 | 0.08 |

(continued)

| | Treatments[1] | | | |
|---|---|---|---|---|
| | Control | Primono | SEM | P = |
| Isovalerate, mM | 1.06 | 0.85 | 0.07 | 0.06 |
| Valerate, mM | 1.90 | 1.80 | 0.08 | 0.43 |
| Caproic, mM | 0.47 | 0.40 | 0.06 | 0.44 |
| Acetate/propionate | 1.57 | 1.61 | 0.05 | 0.53 |
| Total VFA, mM | 108.5 | 103.3 | 2.6 | 0.18 |

[1]High-yielding dairy cows were fed either a Control - standard Israeli milking-cow ration that contained 1.78 kg DM of oat hay (8.9 % of diet - DM basis), or Primono - fed similar ration that contained 1.78 kg DM of primono legume (8.9 % of diet - DM basis).

Milk yields were 2.2% (1.1 kg) higher (P < 0.03), energy corrected milk (ECM) was 2.8% higher (P < 0.02) in in the Primono than in the control cows. The 4% FCM yields were similar, but the Israeli economic corrected milk (IECM) was 4.7% (3.3 kg) higher in the Primono cows. Fat percentage in milk was similar, protein percentage tended to be higher (P < 0.07) and the lactose percentage was higher (P < 0.01) in the Primono than in the Control cows. Average daily fat yields were similar, but protein yields were 9.4% higher (0.16 kg) in the Primono cows. Dry matter intake was numerically lower in the Primono cows, (P < 0.17) and the production efficiency of the Primono cows was higher than in the Controls for all parameters that were calculated. The energy balance was higher in the Control cows, with no differences in BW gain between groups. Rumen ammonia concentrations were 10% lower in the Primono cows, butyrate concentration tended to be lower in the Primono cows, with no other differences in pH or other VFA concentrations.

Discussion:

In summary, substitution of oat hay with Primono hay increased the milk, ECM and protein and the IECM yields. In addition, the inclusion of Primono in the cow's ration significantly improved the production efficiency.

The terminology used herein is for the purpose of describing particular embodiments only and is not intended to be limiting of the invention. As used herein, the singular forms "a," "an" and "the" are intended to include plural forms as well, unless the context clearly indicates otherwise. It will be further understood that the terms "comprises" or "comprising," when used in this specification, specify the presence of stated features, integers, steps, operations, elements components and/or groups or combinations thereof, but do not preclude the presence or addition of one or more other features, integers, steps, operations, elements, components and/or groups or combinations thereof. As used herein the terms "comprises", "comprising", "includes", "including", "having" and their conjugates mean "including but not limited to". The term "consisting of" means "including and limited to".

As used herein, the term "and/or" includes any and all possible combinations or one or more of the associated listed items, as well as the lack of combinations when interpreted in the alternative ("or").

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the specification and claims and should not be interpreted in an idealized or overly formal sense unless expressly so defined herein. Well-known functions or constructions may not be described in detail for brevity and/or clarity.

It will be understood that, although the terms first, second, etc., may be used herein to describe various elements, components, regions, layers and/or sections, these elements, components, regions, layers and/or sections should not be limited by these terms. Rather, these terms are only used to distinguish one element, component, region, layer and/or section, from another element, component, region, layer and/or section.

Certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

Whenever the term "about," is used, it is meant to refer to a measurable value such as an amount, a temporal duration, and the like, and is meant to encompass variations of $\pm 20\%$, $\pm 10\%$, $\pm 5\%$, $\pm 1\%$, or $\pm 0.1\%$ from the specifiedvalue, as such variations are appropriate to perform the disclosed methods.

In case of conflict, the patent specification, including definitions, will prevail. In addition, the materials, methods, and examples are illustrative only and not intended to be limiting.

It will be appreciated by persons skilled in the art that the present invention is not limited to what has been particularly shown and described hereinabove. The scope of the present invention is defined by the appended claims.

**Claims**

1. A total mixed ration, TMR, for a livestock animal comprising a forage legume component, wherein said legume component is derived from a legume species *Ononis alopecuroides,* wherein the legume forage component derived from *Ononis alopecuroides* is the only forage legume component.

2. The TMR of claim 1, wherein the legume forage component is *Ononis alopecuroides* hay.

3. The TMR of one of claims 1 and 2, wherein the legume forage component derived from *Ononis alopecuroides* is in the form of hay having *in-vitro* neutral detergent fiber, NDF digestibility of at least 15%, determined according to analytical method of the Association of Official Analytical Chemists, AOAC.

4. The TMR of any one of claims 1 to 3, wherein the legume forage component derived from *Ononis alopecuroides* is in the form of hay having *in-vitro* acidic detergent fiber (ADF) digestibility of at least 20%, determined according to analytical method of the Association of Official Analytical Chemists, AOAC.

5. The TMR of any one of claims 1 to 4, wherein the legume forage component derived from *Ononis alopecuroides* is in the form of hay having crude protein of at least 10%.

6. A method for improving a nutritional value of a total mixed ration, TMR, for a livestock animal comprising incorporating into the TMR a legume forage component derived from *Ononis alopecuroides,* wherein the legume forage component derived from *Ononis alopecuroides* is the only forage legume component.

7. The method of claim 6, wherein the legume forage component derived from *Ononis alopecuroides* is in the form of hay having *in-vitro* neutral detergent fiber, NDF, digestibility of at least 15%, determined according to analytical method of the Association of Official Analytical Chemists, AOAC.

8. The method of claim 6 or 7, wherein the legume forage component derived from *Ononis alopecuroides* is in the form of hay having *in-vitro* acidic detergent fiber, ADF, digestibility of at least 20%, determined according to analytical method of the Association of Official Analytical Chemists, AOAC.

9. The method of any one of claims 6 to 8, wherein the legume forage component derived from *Ononis alopecuroides* is in the form of hay having crude protein of at least 10%.

10. A method of enhancing milk yield in a dairy cow, comprising providing the dairy cow at the lactating state with a total mixed ration, TMR, comprising a legume forage component derived from a legume species *Ononis alopecuroides,* wherein the legume forage component derived from *Ononis alopecuroides* is the only forage legume component.

**Patentansprüche**

1. Eine Totalmischration (TMR) für ein Nutztier, umfassend eine Leguminosen Futterkomponente, wobei die Leguminosen Futterkomponente aus einer Leguminosenart *Ononis alopecuroides* abgeleitet ist, wobei die Leguminosen Futterkomponente, die aus *Ononis alopecuroides* abgeleitet ist, die einzige Leguminosen Futterkomponente ist.

2. Die TMR nach Anspruch 1, wobei die Leguminosen Futterkomponente Ononis *alopecuroides* Heu ist.

3. Die TMR nach einem der Ansprüche 1 und 2, wobei die Leguminosen Futterkomponente, die aus *Ononis alopecuroides* abgeleitet ist, in Form von Heu mit einer in-vitro Neutral-Detergentien-Faser (NDF) Verdaulichkeit von mindestens 15 % vorliegt, bestimmt nach dem analytischen Verfahren des Verbandes der Offiziellen Analytischen Chemiker (AOAC).

4. Die TMR nach einem der Ansprüche 1 bis 3, wobei die Leguminosen Futterkomponente, die aus *Ononis alopecuroides* abgeleitet ist, in Form von Heu mit einer in-vitro Säure-Detergentien-Faser (ADF) Verdaulichkeit von mindestens 20 % vorliegt, bestimmt nach dem analytischen Verfahren des Verbandes der Offiziellen Analytischen Chemiker (AOAC).

5. Die TMR nach einem der Ansprüche 1 bis 4, wobei die Leguminosen Futterkomponente, die aus *Ononis alopecuroides* abgeleitet ist, in Form von Heu mit einem Rohproteingehalt von mindestens 10 % vorliegt.

6. Ein Verfahren zur Verbesserung des Nährwerts einer Totalmischration (TMR) für ein Nutztier, umfassend die Einarbeitung einer Leguminosen Futterkomponente, die aus *Ononis alopecuroides* abgeleitet ist, in die TMR, wobei die Leguminosen Futterkomponente, die aus *Ononis alopecuroides* abgeleitet ist, die einzige Leguminosen Futterkomponente ist.

7. Das Verfahren nach Anspruch 6, wobei die Leguminosen Futterkomponente, die aus *Ononis alopecuroides* abgeleitet ist, in Form von Heu mit einer in-vitro Neutral-Detergentien-Faser (NDF) Verdaulichkeit von mindestens 15 % vorliegt, bestimmt nach dem analytischen Verfahren des Verbandes der Offiziellen Analytischen Chemiker (AOAC).

8. Das Verfahren nach Anspruch 6 oder 7, wobei die Leguminosen Futterkomponente, die aus *Ononis alopecuroides* abgeleitet ist, in Form von Heu mit einer in-vitro Säure-Detergentien-Faser (ADF) Verdaulichkeit von mindestens 20 % vorliegt, bestimmt nach dem analytischen Verfahren des Verbandes der Offiziellen Analytischen Chemiker (AOAC).

9. Das Verfahren nach einem der Ansprüche 6 bis 8, wobei die Leguminosen Futterkomponente, die aus *Ononis alopecuroides* abgeleitet ist, in Form von Heu mit einem Rohproteingehalt von mindestens 10 % vorliegt.

10. Ein Verfahren zur Erhöhung der Milchproduktion bei einer Milchkuh, umfassend die Bereitstellung der Milchkuh im Laktationszustand mit einer Totalmischration (TMR), umfassend eine Leguminosen Futterkomponente, die aus einer Leguminosenart *Ononis alopecuroides* abgeleitet ist, wobei die Leguminosen Futterkomponente, die aus *Ononis alopecuroides* abgeleitet ist, die einzige Leguminosen Futterkomponente ist.

**Revendications**

1. Une ration totale mélangée, RTM, pour un animal d'élevage comprenant un composant de légumineuse fourragère, où ledit composant de légumineuse est dérivé d'une espèce de légumineuse *Ononis alopecuroides,* où le composant de légumineuse fourragère dérivé *d'Ononis alopecuroides* est le seul composant de légumineuse fourragère.

2. La RTM de la revendication 1, où le composant de légumineuse fourragère est le foin *d'Ononis alopecuroides.*

3. La RTM selon l'une des revendications 1 ou 2, où le composant de légumineuse fourragère dérivé *d'Ononis alopecuroides* est sous forme de foin ayant une digestibilité de la fibre détergente neutre (FDN) in vitro d'au moins 15 %, déterminée selon la méthode analytique de l'Association des Chimistes Analytiques Officiels (AOAC).

4. La RTM selon l'une des revendications 1 à 3, où le composant de légumineuse fourragère dérivé *d'Ononis alopecuroides* est sous forme de foin ayant une digestibilité de la fibre détergente acide (FDA) in vitro d'au moins 20 %, déterminée selon la méthode analytique de l'Association des Chimistes Analytiques Officiels (AOAC).

**5.** La RTM selon l'une des revendications 1 à 4, où le composant de légumineuse fourragère dérivé *d'Ononis alopecuroides* est sous forme de foin ayant une teneur en protéines brutes d'au moins 10 %.

**6.** Un procédé pour améliorer la valeur nutritionnelle d'une ration totale mélangée, RTM, pour un animal d'élevage comprenant l'incorporation dans la RTM d'un composant de légumineuse fourragère dérivé *d'Ononis alopecuroides,* où le composant de légumineuse fourragère dérivé *d'Ononis alopecuroides* est le seul composant de légumineuse fourragère.

**7.** Le procédé selon la revendication 6, où le composant de légumineuse fourragère dérivé *d'Ononis alopecuroides* est sous forme de foin ayant une digestibilité de la fibre détergente neutre (FDN) in vitro d'au moins 15 %, déterminée selon la méthode analytique de l'Association des Chimistes Analytiques Officiels (AOAC).

**8.** Le procédé selon l'une des revendications 6 ou 7, où le composant de légumineuse fourragère dérivé *d'Ononis alopecuroides* est sous forme de foin ayant une digestibilité de la fibre détergente acide (FDA) in vitro d'au moins 20 %, déterminée selon la méthode analytique de l'Association des Chimistes Analytiques Officiels (AOAC).

**9.** Le procédé selon l'une des revendications 6 à 8, où le composant de légumineuse fourragère dérivé d'Ononis alopecuroides est sous forme de foin ayant une teneur en protéines brutes d'au moins 10 %.

**10.** Un procédé pour améliorer le rendement laitier d'une vache laitière, comprenant fournir à la vache laitière en lactation une ration totale mélangée, RTM, comprenant un composant de légumineuse fourragère dérivé d'une espèce de légumineuse *Ononis alopecuroides,* où le composant de légumineuse fourragère dérivé *d'Ononis alopecuroides* est le seul composant de légumineuse fourragère.

FIG. 1

FIG.2

FIG. 3

FIG.4

FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NAIR R M et al.** Evaluating pasture legumes for resistance to aphids. *AUSTRALIAN JOURNAL OF EXPERIMENTAL AGRICULTURE, CSIRO, COLLINGWOD, AU*, vol. 43 (11), ISSN 0816-1089, 1345-1349, http://www.publish.csiro.au/?paper=-EA03187